Europäisches Patentamt

European Patent Office

Office européen des brevets

(11) Publication number: **0 225 943**
**A1**

## (12) EUROPEAN PATENT APPLICATION

(21) Application number: 85308806.0

(22) Date of filing: 03.12.85

(51) Int. Cl.⁴: **B05C** .17/00 , B29C 65/42

(43) Date of publication of application:
24.06.87 Bulletin 87/26

(84) Designated Contracting States:
**DE FR GB NL SE**

(71) Applicant: **Drader, Clarence H.**
**52073 Highway 21**
**Sherwood Park Alberta, T8B 1J4(CA)**

(72) Inventor: **Drader, Clarence H.**
**52073 Highway 21**
**Sherwood Park Alberta, T8B 1J4(CA)**

(74) Representative: **Stanley, David William et al**
**APPLEYARD LEES & CO. 15 Clare Road**
**Halifax**
**West Yorkshire HX1 2HY(GB)**

(54) **Apparatus for and process of welding thermoplastics material.**

(57) A device 1 is provided for forming a plastics weld, to repair a crack in a plastic article or join two plastics parts. The device 1 comprises a barrel 2 having an internal chamber 3. A nozzle 19 may be part of the barrel 2 and forms a restrictive orifice outlet 4. A plastics filler rod 7 can be forced by drive rolls 6a, 6b into the chamber 3 through an inlet 5. A heater coil 8 is provided to heat the barrel 2. In use, the drive rolls 6a, 6b are actuated to fill the chamber 3 with filler plastics and generate a high pressure - (eg 2500 psi or 17.25 MN/m²). Concurrently, the heater coil 8 heats the plastics in the chamber 3 to a molten state. The molten plastics is forcefully ejected through the orifice outlet 4. To effect the weld, the hot tip 4 of the nozzle is buried in the workpiece and drawn along the crack; it plasticizes the weld area plastics as it moves along. At the same time, the molten filler plastic is jetted into the molten weld area plastic and forcefully intermixed therewith to generate a competent weld.

Fig.1

## APPARATUS FOR AND PROCESS OF WELDING THERMOPLASTICS MATERIAL

This invention relates to apparatus for and a process of welding thermoplastics material.

Plastics welding is commonly used to weld together the walls of a crack in a plastics article or to form a connecting weld along a junction line to join two plastic parts. (The word "workpiece" is used conveniently herein to encompass both an article to be repaired and two parts to be joined.)

Heretofore, the procedure commonly used has involved the following:

-usually forming a V-shaped joint or channel along a crack or junction line, to provide space for a filler material and to remove surface oxides;

-buffing or rubbing with sandpaper the surfaces of the workpiece weld area and a filler rod, to remove surface oxides;

-pre-heating the weld area (i.e. the sloped surfaces of the channel) to welding temperature (450 - 800°F) using a hot gas jet;

-and immediately thereafter laying a rod or strip of filler plastics into the heated channel and at the same time applying a jet of hot gas to heat the portion of filler material being laid in, to the welding temperature, with the result that the filler material fuses with the workpiece material to form the weld.

Prior art United States patents which are exemplary of this technique are 2,722,964 (Duncan), 3,853,669 (Westlein), 3,047,050 (Sourber), and 2,862,543 (Kaminsky).

In our view, there are a number of problems associated with this prior art technique. More particularly:

(1) There is a high incidence of defective welds produced. In some cases, the weld does not hold at all, in other cases it is too weak to provide acceptable performance in use;

(2) The process is slow and labour-intensive, thereby making it costly. For example, the requirements:

-that the crack of junction line be "V'ed" out before welding;

-that pass after pass of small diameter filler rod be laid into the V channel, to fill it from the apex up; and

-that the filler rod and workpiece weld area be cleaned by buffing before welding;

all result in labour consumption with accompanying cost;

and

(3) The use of hot gas to effect softening of the filler and workpiece materials is inefficient. It is difficult to localize the hot gas sufficiently, so that only that portion of the workpiece that requires softening is softened. It has been calculated that the provision of hot gas consumes about 1/3 of the total expenditure used to make the weld.

There has therefore long existed a need to provide a welding process that addresses these shortcomings and is improved with respect to them. The present invention aims to satisfying this need, at least in preferred embodiments thereof.

According to a first aspect of the present invention, there is provided apparatus for use in welding thermoplastics material, the apparatus comprising:

a chamber adapted to hold filler plastics under pressure;

a nozzle which is in communication with the chamber;

forcing means for forcing filler plastics into the chamber at a rate sufficient to maintain a supply of pressurized plastics in said chamber; and

heating means for heating the chamber whereby plastics in the chamber may be heated to a molten condition and the tip of the nozzle may be kept hot enough to heat workpiece plastics in a weld area to a molten condition when the tip is contacted therewith.

Preferably, the chamber has an inlet for filler plastics, which inlet is disposed at a point remote from the nozzle.

The apparatus preferably comprises a barrel, in which said chamber is defined. Said barrel may define an inlet to the chamber. The chamber may be elongate.

The forcing means is preferably adapted to force filler plastics in rod form, into the chamber. The forcing means may comprise a pair of rotatable drive rolls which are arranged to engage a rod of filler plastics and force feed that rod axially into the chamber.

The drive rolls may be mounted on a frame which is connected with said barrel, and drive means may be connected with the frame, for driving the rolls.

Said heating means is preferably an electrical heating means.

The apparatus is preferably adapted for handheld operation.

In another aspect, the invention provides a process of welding a workpiece of thermoplastics material, using an apparatus in accordance with the first aspect of the invention, the process comprising the steps of:

(a) forcing filler plastics into the chamber under pressure;

(b) heating the chamber to render the contained filler plastics molten and supplying heat to the nozzle; and

(c) moving the hot nozzle tip along the workpiece to render molten the plastics in the weld area and to plough a furrow in the workpiece; whereby a jet of molten filler plastics is forcefully injected from the chamber through the nozzle tip into the workpiece molten plastics to fuse therewith and produce a weld.

Preferably, the steps (a), (b) and (c) above are practiced simultaneously.

The processes is of particular application where the weld is made at a crack in the workpiece or at a junction line between two parts.

For a better understanding of the invention and to show how the same can be carried into effect, reference will now be made, by way of example, to the accompanying diagrammatic drawings, in which:

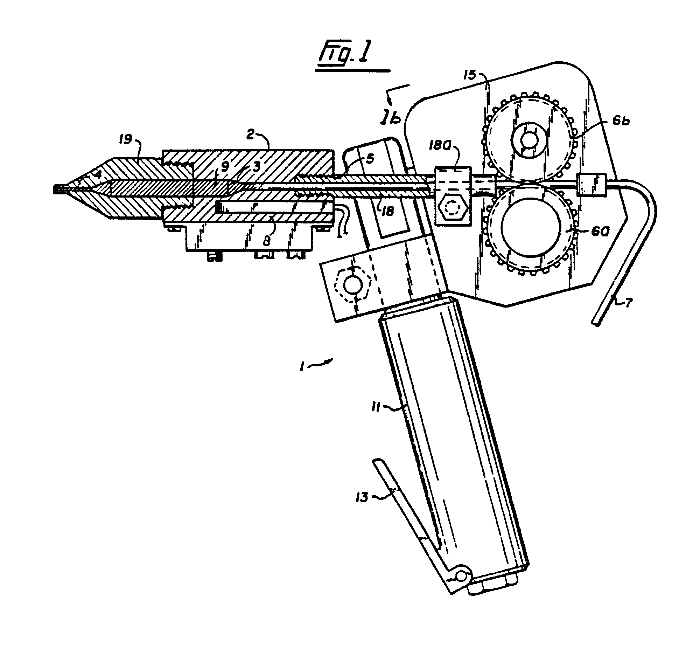

Figure 1 is a side view, partly in section, of one side of a gun comprising apparatus in accordance with the inventions;

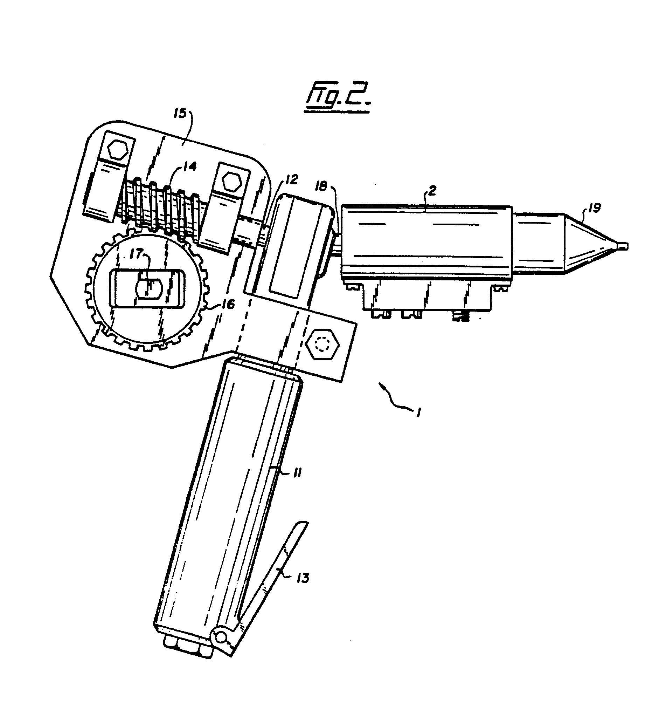

Figure 2 is a side view of the other side of the gun;

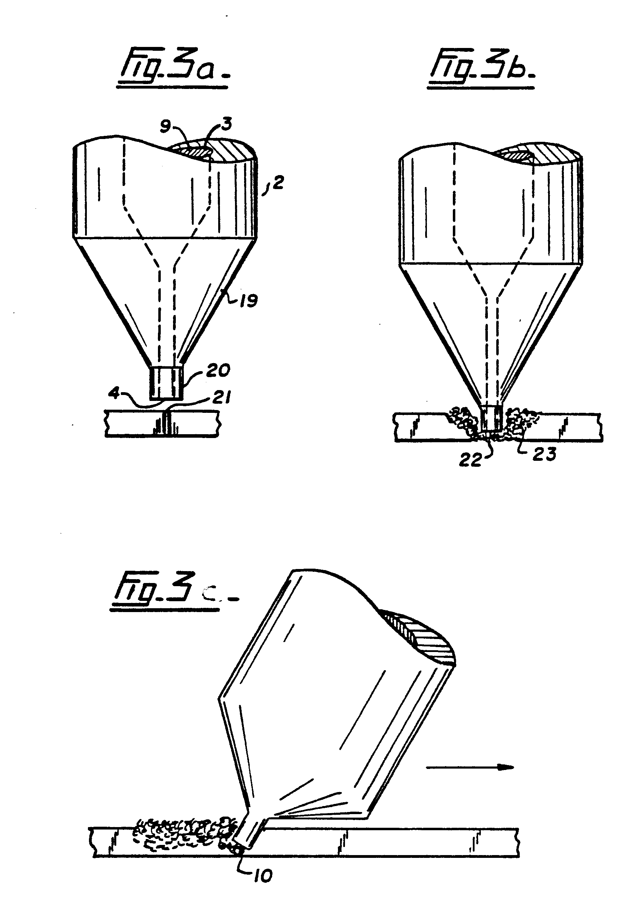

Figure 3 (a) is an end view showing a nozzle in close proximity to a junction line to be welded;

Figure 3 (b) is a fanciful representation of an end view showing the nozzle having penetrated a workpiece and in the process of ploughing a furrow and injecting filler plastics; and

Figure 3 (c) is a side view corresponding to Figure 3 (b).

In broad outline, the illustrated gun 1 comprises a barrel 2 forming an elongate internal chamber 3 having a filler rod inlet 5 at one end and a nozzle 19 with a restrictive orifice outlet 4 at its other end. A pair of suitably driven drive rolls 6a, 6b feed a filler rod 7 of plastics into the chamber 3 through the inlet 5. A heater coil 8 heats the barrel 2 to plasticize the filler plastics 9 in the chamber 3. The molten plastics is ejected as a jet 10 from the chamber 3 through the orifice outlet 4.

In the preferred embodiment shown, the drive rolls 6a, 6b are used to force the filler rod 7 into the chamber 3, thereby to pressurize the molten plastic 9 at the orifice end of the chamber. This system was devised to provide a light unit that could easily be hand held. However, in another embodiment, we have used a hydraulically driven piston in a cylinder to feed increments of plastic into the barrel chamber and to pressurize the plastic in the chamber. This piston embodiment is not described in detail herein. However it is to be understood that the invention encompasses means other than drive rolls to feed the filler plastic into the chamber and to generate pressure therein.

As shown, the preferred embodiment comprises a conventional air driven ratchet wrench 11 having an output shaft 12. This wrench 11 is used to power the drive rolls 6a, 6b. Actuation of the ratchet wrench 11 may be controlled by a switch 13.

The wrench output shaft 12 is connected with a worm 14, which is mounted on a plate or frame 15 secured to the wrench 11. The worm 14 meshes with a worm gear 16 which is connected by a shaft 17 with one grooved and geared feed roll 6a. The shaft 17 is mounted to the frame 15. The teeth of the shaft-driven feed roll 6a drive the teeth of the other grooved and geared feed roll 6b, so that they rotate together.

In operation, the feed rolls 6a, 6b are rotated together by actuation of the wrench 11, to axially and forcefully feed the filler rod 7, which is tightly gripped between them, into the chamber 3.

The barrel 2 which forms the chamber 3 is of steel. A tube 18 extends into the inlet 5 of the barrel 2 and is secured thereto. The tube 18 functions as a guide, to direct the filler rod 7 into the chamber 3. The tube 18 is also secured to the frame 15 by a bracket 18a. Thus the tube 18 and barrel 2 are attached to the wrench 11 and frame 15 -these components together form a solid unit.

The nozzle 19 attached to the outlet end of the barrel 2 is copper.

Actuation of the electric heater coil 8, which is mounted in the wall of the barrel 2, heats the barrel 2, nozzle 19, and the plastics in the nozzle 19 and the forward end of the chamber 3 to a high temperature.

In use, the drive system is operated to force filler rod 7 into the chamber 3 so as to generate a suitable pressure therein, typically in the order of 2500 psi (approx 17.25 $MN/m^2$). The heater coil 8 is operated to bring the nozzle 19, barrel 2 and plastics 9 in the chamber 3 to a suitable temperature, typically about 500°F. The heated nozzle tip 20 is pressed into contact with the weld area of the thermoplastics workpiece and drawn along the crack or junction line 21. The heat from the tip 20 quickly plasticizes the thermoplastics of the weld area. As the nozzle tip is moved along, with the orifice outlet 4 preferably submerged in the workpiece plastics, a furrow is ploughed in the workpiece, and oxidized plastics is displaced upwardly out of the furrow, leaving the furrow having a relatively clean, molten plastics surface layer, into which the jet 10 is injected. Forced intermixing of the injected filler plastics 22 and the heated workpiece plastics 23 takes place and a competent weld is generated.

Preferably, the filler plastics is of the same composition as the thermoplastics of the workpiece, or at least has similar characteristics thereto, sufficient to ensure satisfactory fusing of the two plastics to form a competent weld.

The nozzle 19 may form part of the barrel 2.

The above described embodiment may afford the following advantages:

-forcefully delivering the molten filler material through a virtually submerged orifice into the molten workpiece material produces a forced intermingling that yields a strong weld;

-the hot tip ploughs through the oxidized plastic material along the edges of the crack or junction line and disperses at least some of it away from the weld area, thereby improving the possibility of obtaining a strong weld;

-by using a heated tip instead of hot gas to supply heat to the workpiece plastic in the weld area, localization and efficiency of heating is improved and the cost of the weld is significantly reduced;

-because the molten filler material is supplied to the weld area, it is capable of distributing itself in the channel -by using a thicker filler rod, it is thus possible to completely fill the channel in one or two passes and thereby shorten the time to produce the weld.

## Claims

1. Apparatus for use in welding a thermoplastics material the apparatus comprising:
a chamber (3) adopted to hold filler plastics (9) under pressure;
a nozzle (19) which is in communication with the chamber (3);
forcing means (6a, 6b, 18) for forcing filler plastics (7) into the chamber at a rate sufficient to maintain a supply of pressurized plastics (9) in said chamber (3); and
heating means (8) for heating the chamber (3) whereby plastics (9) in the chamber (3) may be heated to a molten condition and the tip (4) of the nozzle (19) may be kept hot enough to heat workpiece plastics in a weld area to a molten condition when the tip (4) is contacted therewith.

2. Apparatus according to Claim 1, wherein said chamber has an inlet (5) for filler plastics (7), which inlet (5) is disposed at a point remote from the nozzle (19).

3. Apparatus according to Claim 1 or 2, comprising a barrel (2) in which said chamber (3) is defined.

4. Apparatus according to Claim 3, wherein said barrel (2) defines an inlet (5) to the chamber - (3).

5. Apparatus according to any preceding Claim, wherein said chamber (3) is elongate.

6. Apparatus according to any preceding claim, wherein said forcing means (6a, 6b, 18) is adapted to force filler plastics in rod (7) form, into the chamber (3).

7. Apparatus according to Claim 6, wherein said forcing means comprises a pair of rotatable drive rolls (6a, 6b) arranged to engage a rod (7) of filler plastics and force feed said rod (7) axially into the chamber (3).

8. Apparatus according to Claims 2 and 7, wherein said drive rolls (6a, 6b) are mounted on a frame (15) which is connected with said barrel, and drive means (11) is connected with the frame (15), for driving the rolls (6a, 6b).

9. Apparatus according to any preceding claim, wherein said heating means (8) is an electrical heating means.

10. Apparatus according to any preceding claim, being adapted for hand-held operation.

11. A process of welding a workpiece of thermoplastics material, using an apparatus according to any preceding claim, the process comprising the steps of:
(a) forcing filler plastics (9) into the chamber (3) under pressure;
(b) heating the chamber to render the contained filler plastics (9) molten and supplying heat to the nozzle; and
(c) moving the hot nozzle tip (4) along the workpiece to render molten the plastics (23) in the weld area and to plough a furrow (23) in the workpiece;
whereby a jet of molten filler plastics (22) is forcefully injected from the chamber (3) through the nozzle tip (4) into the workpiece molten plastics - (23) to fuse therewith and produce a weld.

12. A process according to claim 11, wherein steps (a), (b) and (c) are practised simultaneously.

13. A process accordingly to claim 11 or 12, wherein the weld is made at a crack in the workpiece or at a junction line between two parts.

Fig. 1

_Fig. 2._

Fig.3a.

Fig.3b.

Fig.3c.

European Patent
Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 681 685 (ARKLESS)<br>* Figure 2 * | 1-10 | B 05 C 17/00<br>B 29 C 65/42 |
| X | US-A-3 232 509 (NEWTON)<br>* Figure 3 * | 1-10 | |
| X | US-A-3 279 971 (GARDENER)<br><br>* Figures; column 2, lines 52-56; column 3, lines 24-26 * | 1-6,9-13 | |
| Y | | 7,8 | |
| X | GB-A- 848 967 (DU PONT DE NEMOURS)<br>* Figures; page 1, lines 65-72; claim 4 * | 1-6,9-13 | TECHNICAL FIELDS SEARCHED (Int. Cl.4) |
| Y | | 7,8 | B 05 C<br>B 29 C |
| X | BE-A- 513 087 (ALUMINIUMSCHWEISSWERK)<br>* Page 2, lines 35-39 * | 1-6,9-13 | |
| X | DE-B-1 126 592 (BEUGLET)<br><br>* Figures; page 3, column 3, line 30 - column 4, line 8 * | 1-6,9-13 | |

--- -/-

The present search report has been drawn up for all claims

| Place of search | Date of completion of the search | Examiner |
|---|---|---|
| THE HAGUE | 12-08-1986 | CORDENIER J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

## DOCUMENTS CONSIDERED TO BE RELEVANT

Page 2

| Category | Citation of document with indication. where appropriate, of relevant passages | Relevant to claim | CLASSIFICATION OF THE APPLICATION (Int. Cl.4) |
|---|---|---|---|
| X | GB-A-2 093 763 (GUNDLE HOLDING)<br>* Claims 1,4 * | 1,11 | |
| Y | US-A-3 604 597 (POHL)<br>* Figures * | 7,8 | |
| A | GB-A-1 175 650 (STANDARD TELEPHONES)<br>* Figures, ref. 10; page 2, lines 5-6 * | 1 | |
| A | DE-U-6 945 152 (HOECHST)<br>* Figures * | 1-13 | |
| A | FR-A-1 207 094 (REGAD)<br>* Whole document * | 1,11 | |
| A | DE-C- 882 143 (K. SENCKEL)<br>* Figures * | 1,7,8, 11-13 | TECHNICAL FIELDS SEARCHED (Int. Cl.4) |
| A | DE-A-1 454 937 (ANGER)<br>* Figures 2-4; claim 1 * | 11-13 | |

The present search report has been drawn up for all claims

| Place of search | Date of completion of the search | Examiner |
|---|---|---|
| THE HAGUE | 12-08-1986 | CORDENIER J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document